# EUROPÄISCHE PATENTSCHRIFT

(11) **EP 1 628 326 B1**
(45) Veröffentlichungstag und Bekanntmachung des Hinweises auf die Patenterteilung: **08.10.2008**
(21) Anmeldenummer: 05015665.2
(22) Anmeldetag: 19.07.2005
(51) Int. Cl.: H01K 1/14, H01K 9/08

(54) **Elektrische Glühlampe für Fahrzeugscheinwerfer**
Incandescent lamp for vehicle headlight
Lampe à incandescence pour phare de véhicule

(30) Priorität: 19.08.2004 DE 102004040415
(43) Veröffentlichungstag der Anmeldung: 22.02.2006
(73) Patentinhaber: Patent-Treuhand-Gesellschaft für elektrische Glühlampen mbH, 81543 München (DE)
(72) Erfinder: Bühler, Manfred, 89542 Herbrechtingen (DE); Wittmann, Klaus, 89567 Sontheim (DE)
(74) Vertreter: Raiser, Franz

(56) Entgegenhaltungen:
- EP-A1- 1 102 309
- EP-A1- 1 104 010
- EP-A2- 0 123 844
- DD-A1- 243 141
- DE-A1- 2 401 541
- ANONYMOUS: "Differential pitch helix coil for copier lamp" RESEARCH DISCLOSURE, MASON PUBLICATIONS, HAMPSHIRE, GB, Bd. 299, Nr. 14, März 1989 (1989-03), XP007113477 ISSN: 0374-4353

## Beschreibung

Die Erfindung betrifft eine elektrische Glühlampe gemäß dem Oberbegriff des Patentanspruchs 1.

### I. Stand der Technik

Eine derartige elektrische Glühlampe ist beispielsweise in der deutschen Patentschrift DD 243 141 A1 offenbart. Diese Schrift beschreibt eine stabförmige elektrische Glühlampe mit einer Glühwendel, deren Steigung bzw. Steigungsfaktor sich von der Glühwendelmitte in Richtung der beiden Glühwendelenden stetig oder sprunghaft verringert. Die Steigung ist definiert als die Summe aus dem Wendeldrahtdurchmesser und dem Zwischenraum zweier benachbarter Windungen der Glühwendel. Der Steigungsfaktor ist definiert als der Quotient aus der Steigung und dem Wendeldrahtdurchmesser.

Die Offenlegungsschrift DE 2 401 541 beschreibt eine elektrische Glühlampe mit Leuchtkörpern, die jeweils aus einer Leuchtwendel und einer Schweilßwendel bestehen, wobei die Schweißwendel an den Enden des jeweiligen Leuchtkörpern angeordnet ist und einen größeren Steigungsfaktor als die Leuchtwendel aufweist.

Die Offenlegungsschrift EP 1 104 010 A1 offenbart eine Glühlampe mit einer axial innerhalb des Lampengefäßes ausgerichteten Glühwendel, deren Steigung bzw. Stegungsfaktor ausgehend vom unteren Ende der Glühwendel in Richtung oberen Endes der Glühwendel abnimmt.

Die Offenlegungsschrift EP 1 102 309 A1 beschreibt eine Glühlampe mit einer doppelt gewendelten Glühwendel, deren Primärgewickel am oberen Ende der Glühwendel dichter gewickelt ist.

### II. Darstellung der Erfindung

Es ist die Aufgabe der Erfindung, eine elektrische Glühlampe bereitzustellen, die in einem Fahrzeugscheinwerfer zur Erzeugung des Abblendlichts einsetzbar ist und gegenüber herkömmlichen Scheinwerferlampen eine erhöhte Leuchtdichte für die Abbildung im Scheinwerfer im Bereich der Hell-Dunkel-Grenze gewährleistet.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Die erfindungsgemäße elektrische Glühlampe weist mindestens eine innerhalb eines lichtdurchlässigen Lampengefäßes angeordnete Glühwendel auf, die an ihrem ersten Ende einen ersten Steigungsfaktor und an ihrem zweiten Ende einen zweiten Steigunsfaktor besitzt, wobei der erste Steigungsfaktor kleiner als der zweite Steigungsfaktor ist.

Aufgrund des kleineren Steigungsfaktors besitzt die mindestens eine Glühwendel an ihrem ersten Ende eine höhere Leuchtdichte als an ihrem zweiten Ende. Daher ist die erfindungsgemäße Glühlampe besonders gut für Projektionsanwendungen, beispielsweise als Lichtquelle in einem Fahrzeugscheinwerfer geeignet. Das von dem ersten Wendelende emittierte Licht kann bei dieser Anwendung vorteilhaft zur Erzeugung einer scharfen Hell-Dunkel-Grenze des Abblendlichts genutzt werden, indem es in das Fernfeld vor dem Scheinwerfers projiziert wird und das von dem zweiten Wendelabschnitt emittierte Licht in das Nahfeld des Scheinwerfers, unmittelbar vor dem Fahrzeug projiziert wird. Dadurch kann im Bereich der Hell-Dunkel-Grenze des Abblendlichts, wo eine gute Ausleuchtung erwünscht ist, eine hohe Leuchtdichte erzielt werden.

Die erfindungsgemäße Glühlampe ist vorteilhafter Weise als einseitig gesockelte Glühlampe ausgebildet, dass heißt, ein Ende ihres Lampengefäßes ist mit einem Sockel versehen, wobei das erste Ende der mindestens einen Glühwendel dem mit dem Sockel versehenen Ende des Lampengefäßes zugewandt ist. In Fahrzeugscheinwerfern werden üblicherweise einseitig gesockelte Lampen verwendet, die über eine rückseitige Öffnung in dem Scheinwerferreflektor montiert werden, so dass der Sockel in einer Halterung der rückseitigen Öffnung fixiert wird. Aufgrund dieser Orientierung der Lampe wird das von dem sockelnahen Ende der Glühwendel generierte Licht in den Bereich der Hell-Dunkel-Grenze bzw. das Fernfeld des Scheinwerfers projiziert. Das sockelnahe Ende der Glühwendel wird daher zur Erzielung der vorgenannten Vorteile vorzugsweise von dem ersten Wendelende mit dem kleineren Steigungsfaktor gebildet. Gemäß der bevorzugten Ausführungsbeispiele der Erfindung ist die mindestens eine Glühwendel axial ausgerichtet, dass heißt, die Wendelachse der mindestens einen Glühwendel erstreckt sich parallel zur Längserstreckung des Lampengefäßes bzw. der Glühlampe und im Fall eines axialsymmetrischen Lampengefäßes parallel zur Längsachse oder liegt sogar in der Längsachse des Lampengefäßes.

Gemäß der Erfindung ist an dem ersten Glühwendelende ein erster Wendelabschnitt mit dem ersten Steigungsfaktor und an ihrem zweiten Ende ein zweiter Wendelabschnitt mit dem zweiten Steigungsfaktor angeordnet. Um eine Überhitzung der Glühwendel in ihrem mittleren Wendelabschnitt und eine dadurch bedingte Verkürzung ihrer Lebensdauer zu vermeiden, besitzt der zweite Wendelabschnitt eine größere Anzahl an Windungen als der erste Wendelabschnitt. Vorzugsweise ist das Verhältnis der Windungszahlen des ersten und des zweiten Wendelabschnittes kleiner oder gleich 0,5, um zu gewährleisten, dass sich der zweite Wendelabschnitt zumindest bis zur Wendelmitte erstreckt.

Der zweite Steigungsfaktor der mindestens einen Glühwendel der erfindungsgemäßen Glühlampe ist aus fertigungstechnischen Gründen vorzugsweise kleiner oder gleich 1,8 und ihr erster Steigungsfaktor ist vorzugsweise größer als 1,3. Bei einem Steigungsfaktor größer als 1,8 bestünde die Gefahr, dass sich die Glühwendeln an ihren Enden mit größerem Steigungsfaktor in der Glühwendelzuführvorrichtung verhaken und nicht mehr vereinzelt werden können. Bei Steigungsfaktoren von 1,3 und kleiner könnten elektrische Kurzschlüsse zwischen benachbarten Windungen der Glühwendel auftreten. Bevorzugt wird daher für den ersten, dichter gewickelten Wendelabschnitt ein Steigungsfaktor von 1,5.

### III. Beschreibung der bevorzugten Ausführungsbeispiele

Nachstehend wird die Erfindung anhand mehrerer bevorzugter Ausführungsbeispiele näher erläutert. Es zeigen:
- Figur 1: Eine Seitenansicht einer Glühwendel gemäß des bevorzugten Ausführungsbeispiels der Erfindung in schematischer Darstellung
- Figur 2: Eine Seitenansicht einer Fahrzeugscheinwerferlampe gemäß des ersten Ausführungsbeispiels der Erfindung in schematischer Darstellung
- Figur 3: Eine Seitenansicht einer Fahrzeugscheinwerferlampe gemäß des zweiten Ausführungsbeispiels der Erfindung in schematischer Darstellung
- Figur 4: Eine Darstellung der Steigungsfaktoren der in Figur 1 abgebildeten Glühwendel

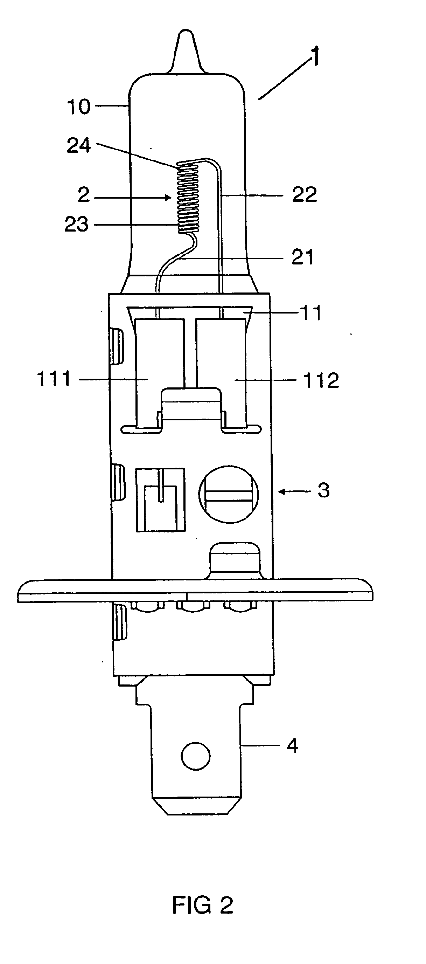

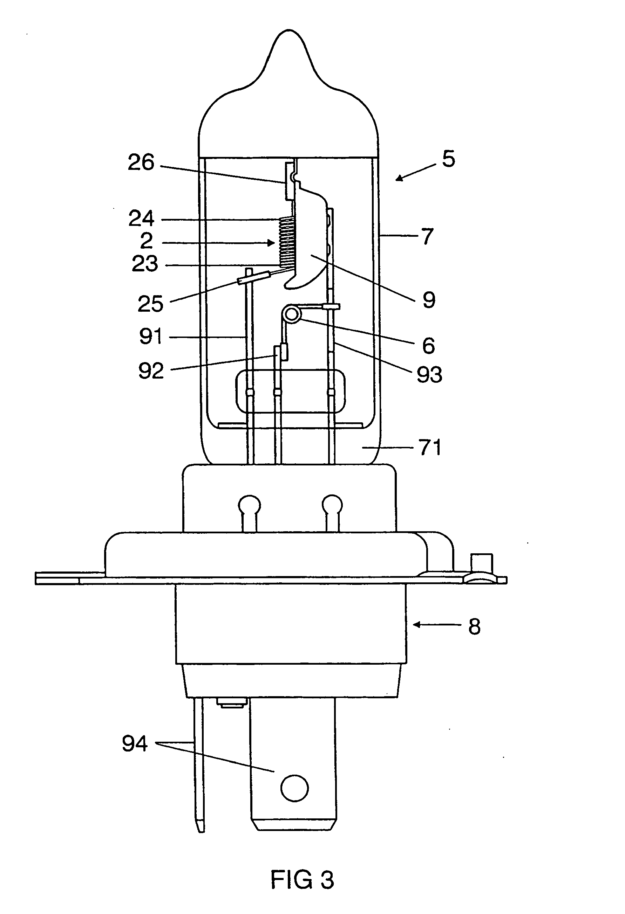

In Figur 2 ist schematisch eine Halogenglühlampe für einen Fahrzeugscheinwerfer gemäß des ersten Ausführungsbeispiels der Erfindung dargestellt. Diese Halogenglühlampe 1 besitzt eine elektrische Leistungsaufnahme von 55 Watt und eine Nennspannung von 12 Volt und dient zur Erzeugung des Abblendlichts in einem Kraftfahrzeugscheinwerfer. Die Halogenglühlampe 1 besitzt ein Lampengefäß 10 aus Quarzglas mit einem abgedichteten Ende 11, das mit einem metallischen Sockel 3 versehen ist. Innerhalb des Lampengefäßes 10 ist eine Glühwendel 2 aus einem einfach gewendelten Wolframdraht 200 angeordnet. Die Glühwendel 2 ist axial innerhalb des Lampengefäßes 10, das heißt parallel zur Längsachse des Lampengefäßes 10 ausgerichtet bzw. liegt in der Längsachse des Lampengefäßes 10. Die beiden ungewendelten Wendelabgänge 21, 22 der Glühwendel 2 sind jeweils über eine gasdicht in dem abgedichteten Ende 11 des Lampengefäßes 10 eingebettete Molybdänfolie 111, 112 mit einem aus dem Lampengefäß 10 herausragenden Stromzuführungsdraht verbunden, der mit der Kontaktfahne 4 bzw. mit der Sockelhülse 3 elektrisch leitend verbunden ist. Die Wendelabgänge 21, 22 sind zur Montage der Glühwendel 2 in der in Figur 3 gezeigten Zweifaden-Halogenglühlampe 5 jeweils mit einem Molybdänröhrchen 25, 26 umgeben, die zum Verschweißen mit dem Stromzuführungsdraht bzw. mit der Abblendkappe dienen. Bei der in Figur 2 abgebildeten Halogenglühlampe 1 wird auf die Molybdänröhrchen 25, 26 verzichtet, da die Wendelabgänge 21, 22 hier direkt mit den Molybdänfolien 111, 112 verschweißt werden können.

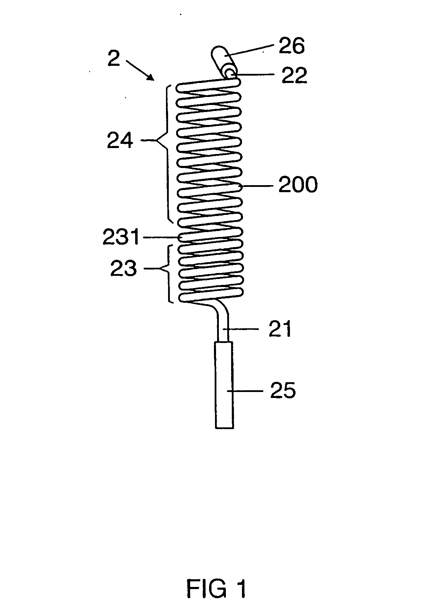

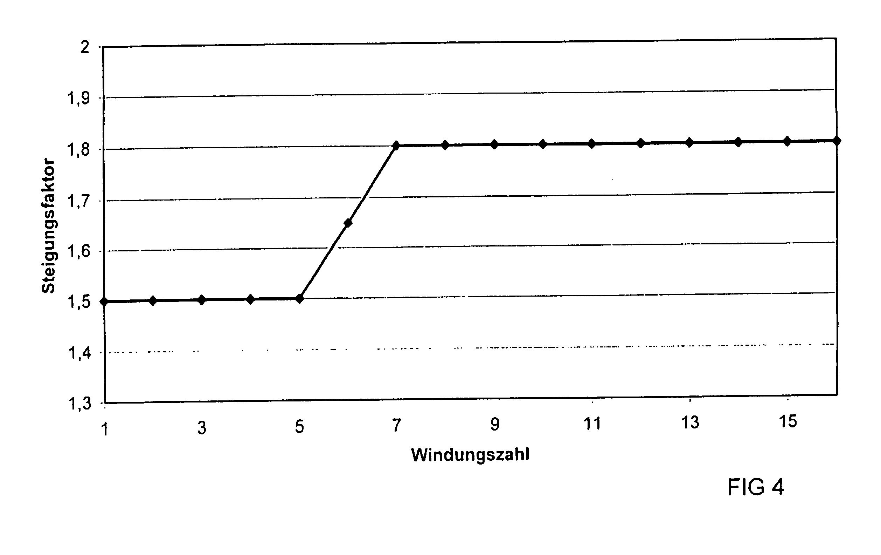

Die Glühwendel 2 ist in Figur 1 schematisch dargestellt. Sie besitzt einen ersten Wendelabschnitt 23 mit einem Steigungsfaktor von 1,5, der sich über fünf Windungen der Glühwendel 2 erstreckt, und einen zweiten Wendelabschnitt 24 mit einem Steigungsfaktor von 1,8, der sich über zehn Windungen erstreckt. Der erste, dichter gewickelte Wendelabschnitt 23 ist dem abgedichteten Ende 11 und dem Sockel 3 zugewandt. Die beiden Wendelabschnitte 23 und 24 sind durch einen Übergangsabschnitt 231 miteinander verbunden, der aus nur einer, nämlich der sechsten Windung besteht. In Figur 4 sind die Steigungsfaktoren der sechzehn Windungen der Glühwendel 2 dargestellt. Der Durchmesser bzw. die Dicke des Wolframdrahts 200 der Glühwendel 2 beträgt 155,2 Mikrometer. Der Außendurchmesser der Windungen der

Glühwendel 2 beträgt 1,24 Millimeter ± 0,01 Millimeter. Der Steigungsfaktor der Wendelabschnitte 23, 24 berechnet sich als Quotient der Steigung der Windungen des jeweiligen Wendelabschnitts 23 bzw. 24 und der Dicke des Glühwendeldrahtes 200. Die Länge der Glühwendel 2, ohne Berücksichtigung der Wendelabgänge 21, 22, beträgt 4,33 Millimeter.

In Figur 3 ist schematisch eine Halogenglühlampe für einen Fahrzeugscheinwerfer gemäß des zweiten Ausführungsbeispiels der Erfindung dargestellt. Bei dieser Halogenglühlampe handelt es sich um eine Zweifaden-Halogenglühlampe 5 mit zwei Glühwendeln 2, 6, die zur Erzeugung des Abblendlichts und des Fernlichts des Fahrzeugs dienen. Diese Halogenglühlampe 5 ist zum Betrieb an einer Bordnetzspannung von nominal 12 Volt vorgesehen. Sie besitzt ein gläsernes Lampengefäß 7 mit einem abgedichteten Ende 71, das mit einem metallischen Sockel 8 versehen ist. Innerhalb des Lampengefäßes 7 sind eine erste Glühwendel 6 zur Erzeugung des Fernlichts und eine zweite Glühwendel 2 zur Erzeugung des Abblendlichts des Fahrzeugs angeordnet. Die Glühwendel 2 besitzt die oben beschriebenen Eigenschaften und ist daher in den Figuren 1, 2 und 3 mit demselben Bezugszeichen versehen. Die Glühwendel 2 ist axial in dem Lampengefäß 7 ausgerichtet, so dass ihr erster Abschnitt 23 dem abgedichteten Ende 71 und dem Sockel 8 zugewandt ist, und außerdem ist sie teilweise von einer Abblendkappe 9 umgeben. Die beiden Glühwendeln 2, 6 werden von drei Stromzuführungsdrähten 91, 92, 93, die durch das abgedichtete Ende 71 des Lampengefäßes 7 herausgeführt und mit jeweils einem der drei elektrischen Anschlüsse 94 der Lampe 5 verbunden sind, getragen und mit elektrischer Energie versorgt. Der erste, mit dem Molybdänröhrchen 25 umhüllte Wendelabgang 21 der Glühwendel 2 ist mit dem Stromzuführungsdraht 91 verschweißt und der zweite, mit dem Molybdänröhrchen 26 umhüllte Wendelabgang 22 der Glühwendel 2 ist mit der Abblendkappe 9 verschweißt.

Die Erfindung beschränkt sich nicht auf die oben näher erläuterten Ausführungsbeispiele. Beispielsweise kann die Dicke des Wendeldrahtes 200 reduziert und die Anzahl der Windungen der Wendelabschnitte 23 und 24 der Glühwendel 2 erhöht werden, um die Glühwendel 2 an eine höhere Bordnetzspannung als 12 Volt, beispielsweise eine Bordnetzspannung von nominal 24 Volt anzupassen. Die Erfindung eignet sich insbesondere für Lampen mit axial ausgerichteter Glühwendel wie zum Beispiel H1-, H7-, H8-, H9-, H11-, HB3-, HB4-Lampen und H4-Lampen sowie H13-Lampen. Um die Leuchtdichte an der Hell-Dunkel-Grenze noch weiter zu erhöhen, kann die Glühwendel 2 zusätzlich konisch ausgebildet werden, so dass der Außendurchmesser ihrer Windungen sich ausgehend von der letzten Windung bis zur ersten Windung stetig verringert.

## Patentansprüche

1. Elektrische Glühlampe mit mindestens einer innerhalb eines lichtdurchlässigen Lampengefäßes (10) angeordneten Glühwendel (2), wobei die mindestens eine Glühwendel (2) eine unterschiedliche Steigung aufweist, so dass die mindestens eine Glühwendel (2) an ihrem ersten Ende einen ersten Wendelabschnitt (23) mit einem ersten, Steigungsfaktor und an ihrem zweiten Ende einen zweiten Wendelabschnitt (24) mit einem zweiten Steigungsfaktor besitzt, wobei der erste Steigungsfaktor kleiner als der zweite Steigungsfaktor ist, **dadurch gekennzeichnet, dass** die Anzahl der Windungen des zweiten Wendelabschnitts (24) größer als die Anzahl der Windungen des ersten Wendelabschnitts (23) ist.

2. Elektrische Glühlampe nach Anspruch 1, **dadurch gekennzeichnet, dass** ein Ende (11) des Lampengefäßes (10) mit einem Sockel (3) versehen ist und das erste Ende der mindestens einen Glühwendel (2) dem mit dem Sockel (3) versehenen Ende (11) des Lampengefäßes (10) zugewandt ist.

3. Elektrische Glühlampe nach Anspruch 1, **dadurch gekennzeichnet, dass** die Wendelachse parallel zur Längserstreckung des Lampengefäßes (10) bzw. der Glühlampe (1) angeordnet ist.

4. Elektrische Glühlampe nach Anspruch 1, **dadurch gekennzeichnet, dass** das Verhältnis der Windungszahlen des ersten (23) und des zweiten Wendelabschnitts (24) kleiner oder gleich 0,5 ist.

5. Elektrische Glühlampe nach Anspruch 1, **dadurch gekennzeichnet, dass** der erste Steigungsfaktor größer als 1,3 und der zweite Steigungsfaktor kleiner oder gleich 1,8 ist.

6. Halogenglühlampe für Fahrzeugscheinwerfer nach einem oder mehreren der Ansprüche 1 bis 5.

## Claims

1. Electric incandescent lamp having at least one incandescent filament (2) which is arranged within a light-permeable lamp vessel (10), the at least one incandescent filament (2) having a different pitch, with the result that the at least one incandescent filament (2) has, at its first end, a first filament section (23) with a first pitch factor and, at its second end, a second filament section (24) with a second pitch factor, the first pitch factor being less than the second pitch factor, **characterized in that** the number of turns in the second filament section (24) is greater than the number of turns in the first filament section (23).

2. Electric incandescent lamp according to Claim 1, **characterized in that** one end (11) of the lamp vessel (10) is provided with a base (3), and the first end of the at least one incandescent filament (2) faces that end (11) of the lamp vessel (10) which is provided with the base (3).

3. Electric incandescent lamp according to Claim 1, **characterized in that** the filament axis is arranged parallel to the longitudinal extent of the lamp vessel (10) or the incandescent lamp (1).

4. Electric incandescent lamp according to Claim 1, **characterized in that** the turns ratio of the first (23) and the second filament section (24) is less than or equal to 0.5.

5. Electric incandescent lamp according to Claim 1, **characterized in that** the first pitch factor is greater than 1.3, and the second pitch factor is less than or equal to 1.8.

6. Halogen incandescent lamp for vehicle headlights according to one or more of Claims 1 to 5.

## Revendications

1. Lampe électrique à incandescence comprenant au moins un filament ( 2 ) incandescent disposé dans une enceinte ( 10 ) de lampe transparente, le au moins un filament ( 2 ) incandescent ayant un pas différent, de sorte que le au moins un filament ( 2 ) incandescent a, à sa première extrémité, un tronçon (23) de filament ayant un premier facteur de pas et à sa deuxième extrémité un deuxième tronçon ( 24 ) de filament ayant un deuxième facteur de pas, le premier facteur de pas étant plus petit que le deuxième facteur de pas, **caractérisée en ce que** le nombre des spires du deuxième tronçon ( 24 ) de filament est plus grand que le nombre des spires du premier tronçon ( 23 ) de filament.

2. Lampe électrique à incandescence suivant la revendication 1, **caractérisée en ce qu'**une extrémité ( 11 ) de l'enceinte ( 10 ) de lampe est munie d'un culot ( 3 ) et **en ce que** la première extrémité du au moins un filament ( 2 ) incandescent est tournée vers l'extrémité ( 11 ) de l'enceinte ( 10 ) de lampe munie du culot ( 3 ).

3. Lampe électrique à incandescence suivant la revendication 1, **caractérisée en ce que** l'axe du filament est parallèle à l'étendue longitudinale de l'enceinte ( 10 ) de lampe ou de la lampe ( 1 ) à incandescence.

4. Lampe électrique à incandescence suivant la revendication 1, **caractérisée en ce que** le rapport des nombres de spires du premier tronçon ( 23 ) et du deuxième tronçon ( 24 ) de filament est inférieur ou égal à 0,5.

5. Lampe électrique à incandescence suivant la revendication 1, **caractérisée en ce que** le premier facteur de pas est plus grand que 1,3 et le deuxième facteur de pas est inférieur ou égal à 1,8.

6. Lampe à incandescence aux halogènes pour des phares de véhicule suivant l'une ou plusieurs des revendications 1 à 5.
